# EUROPEAN PATENT APPLICATION

(11) **EP 1 434 048 A1**
(43) Date of publication of application: **30.06.2004**
(21) Application number: 02760742.3
(22) Date of filing: 26.08.2002
(51) Int. Cl.: G01N 27/22

(54) **CAPACITIVE HUMIDITY−SENSOR AND CAPACITIVE HUMIDITY−SENSOR MANUFACTURING METHOD**

(30) Priority: 31.08.2001 JP 2001264348
(71) Applicant: Kurabe Industrial Co., Ltd, Hamamatsu-shi, Shizouka 432-8521 (JP)
(72) Inventor: KANEHORI, Masashi, c/o Kurabe Industrial Co., Ltd., Hamamatsu-shi, Shizuoka 432-8521 (JP)
(74) Representative: Grünecker, Kinkeldey, Stockmair & Schwanhäusser Anwaltssozietät
(86) International application number: PCT/JP2002/008562
(87) International publication number: WO 2003/021246

(57) **Abstract**

A capacitive humidity sensor comprising a humidity sensitive film made of an organic polymer resin and provided on a conductive substrate serving as a lower electrode, a moisture permeable upper electrode provided on the humidity sensitive film, and a lead wire electrically connected to the upper electrode is characterized in that the area for the junction of the upper electrode and the lead wire is 2.5 mm² or less and/or 10 % or less of the total area of the upper electrode.

## Description

### TECHNICAL FIELD

The present invention relates to a capacitive humidity sensor which detects a relative humidity in an atmosphere according to the change of electric capacitance value of an organic polymer film, and a manufacturing method for capacitive humidity sensor. In particular, the present invention relates to the capacitive humidity sensor which can stably maintain an excellent humidity sensitive property for a long period of time, and which has an improved structure of junction of an electrode and a leading wire so that the production cost may be reduced, and a method for manufacturing such a capacitive humidity sensor easily.

### BACKGROUND ART

A capacitive humidity sensor has a structure, in which a humidity sensitive material has been positioned between two electrodes. The humidity sensitive material has a thin film, in which the moisture in an atmosphere is absorbed, whereby the dielectric constant will be changed according to the absorbed moisture. Thus, a relative humidity in the atmosphere is detected, by utilizing the change of electric capacitance value according to the change of dielectric constant. This type of capacitive humidity sensor has the rapid response to the change of humidity, and in particular, has the excellent measuring accuracy at lower humidity, and thus is used widely, for the purpose of general air conditioning, industry, measurement and meteorological observation.

As for the humidity sensitive material, for example, it is possible to use an organic polymer film or a metal oxide film. In particular, the organic polymer film has been generally used for many purposes, because of its small temperature dependency and small hysteresis, as well as its good reliability around room temperature.

With regard to the organic polymer film, there has been provided an organic polymer film made of polyimide resin. The organic polymer film made of polyimide resin has excellent physical values as a humidity sensitive material of capacitive humidity sensor, i.e. the dielectric constant is 3.0, the water absorption rate is 1 - 3 %, and the volume resistivity is 10¹⁶ - 10¹⁷ Ω cm, and also has the good reliability because of its excellent environmental resistance, such as heat resistance and chemical resistance.

There has been an example of this type of capacitive humidity sensor using the polyimide resin as the humidity sensitive material, disclosed under Japanese Unexamined Patent Publication No. Hei 8-23542. This capacitive humidity sensor is comprising, a silicon single crystal substrate having an ohmic electrode formed on the reverse surface thereof, on which, a humidity sensitive film made of a polyimide resin, an upper thin-film electrode, and a protective film made of a polyimide resin, are laminated in that order, whereby the change of electric capacitance value of the humidity sensitive film between the opposing electrodes can be detected as the change of humidity.

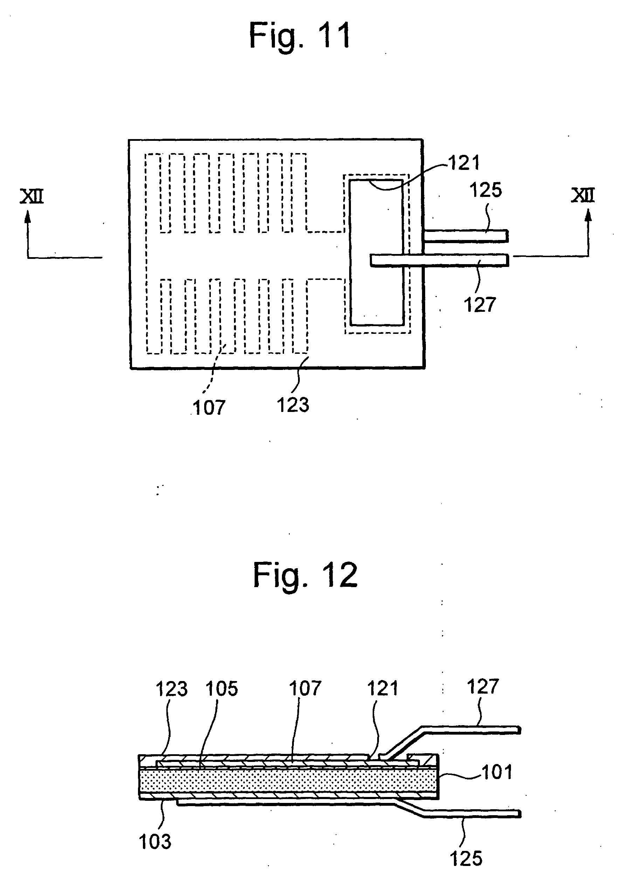

Now, a structure of capacitive humidity sensor according to a conventional art will be explained with reference to Figs. 11 and 12, together with the manufacturing process. Fig. 11 is a plan view showing the structure of this capacitive humidity sensor, and Fig. 12 is a sectional view as seen by the line XII - XII of Fig. 11.

There is a silicon single crystal substrate 101, and a lower electrode 103, made of gold, etc., has been formed on the reverse side of the silicon single crystal substrate 101. There is a humidity sensitive film 105, made of polyimide resin and of which thickness is about 1.0 µ m, formed on the front surface of the silicon single crystal substrate 101. There is an upper electrode 107, made of gold, etc., and having such a thickness that moisture may permeate, on the humidity sensitive film 105. The total area of this upper electrode 107 is 13.35 mm².

There is a protective film 123 provided with an aperture 121, on the upper electrode 107. When the protective film 123 is formed, first, a photosensitive polyimide resin has been coated on the upper electrode 107, and thereafter, the pre-baking, exposure, development and post-baking are applied thereto, whereby the protective film 123 can be formed. The aperture 121 serves as an outlet of a lead wire 127 from the upper electrode 107. The area of the aperture 121 is 2.9 mm², which corresponds to 21.7 % of the total area of the upper electrode 107.

There is another lead wire 125 made of stainless steel plate, electrically connected, by electrically conductive adhesive, to the lower electrode 103 formed on the reverse side of the silicon single crystal substrate 101. Further, the lead wire 127, of which diameter is 0.08 mm and made of silver-plated soft copper wire, is electrically connected, by electrically conductive adhesive, to the upper electrode 107 through the aperture 121 provided in the protective film 123. Thus, the capacitive humidity sensor is obtained.

The capacitive humidity sensor as discussed above has a practically sufficient humidity sensitive property, because there is rather a large change of electric capacitance value against humidity, and there is a small change with aging when being exposed in an atmosphere of high temperature and high humidity.

However, the conventional capacitive humidity sensor discussed as above has the following problems.

First, according to the conventional capacitive humidity sensor, in regard to the outlet of the lead wire 127 from the upper electrode 107, the lead wire 127 must be taken out of the humidity sensitive part. Therefore, the state of a junction between the upper electrode 107 and the lead wire 127 would cause any bad effect to the humidity sensitive property of the capacitive humidity sensor. In other words, the upper electrode 107 has been formed by very thin film having a moisture permeability, and when the lead wire 127 should be electrically connected to this film, the connection must be done by means of any adherent layer, such as an electrically conductive adhesive. At that time, for the purpose of securing the connection strength of the lead wire 127, it is desirable to provide the adherent layer having certain thickness. However, if such an adherent layer having certain thickness is provided, the permeation of moisture will be inhibited, which would cause the deterioration of humidity sensitive property (humidity sensitivity), or the increase of hysteresis.

Second, with regard to the reliability of humidity sensor, in particular, when being exposed in very hard environment such as an atmosphere of high temperature and high humidity for a long time (more than 1,000 hours), the moisture would go inside the adhesive layer gradually, and these molecules cannot be removed easily. Consequently, even when the humidity sensor should be reset to an atmosphere of low humidity, it is impossible to return to the initial state.

Third, the adhesive layer does not only inhibit the permeation, but would also cause a crack at the adhesive part, because of the stress by repeated expansion and shrinkage of structural material, due to excessive thermal stress or humidity stress.

Fourth, since the junction between the upper electrode 107 and the lead wire 127 exists on the humidity sensitive film 105, when the lead wire 127 should be taken out of the upper electrode 107, the very careful work must be done, otherwise the humidity sensitive film 105 may be damaged. Hence, the yield ratio would become seriously poor.

In the light of the above problems, it is an object of the present invention to provide a capacitive humidity sensor which can stably maintain an excellent humidity sensitive property for a long period of time, and also to provide a method for manufacturing such a capacitive humidity sensor at a lower production cost.

### DISCLOSURE OF INVENTION

To achieve the objects mentioned above, according to claim 1 of the present invention, there is provided a capacitive humidity sensor comprising, a humidity sensitive film made of an organic polymer resin and provided on an electrically conductive substrate serving as a lower electrode, a moisture permeable upper electrode provided on the humidity sensitive film, and a lead wire electrically connected to the upper electrode, characterized in that, the area for a junction of the upper electrode and the lead wire is 2.5 mm² or less, and/or 10 % or less of the total area of the upper electrode.

According to claim 2 of the present invention, there is provided a capacitive humidity sensor comprising, a humidity sensitive film made of an organic polymer resin and provided on an electrically conductive substrate serving as a lower electrode, a moisture permeable upper electrode provided on the humidity sensitive film, a protective film made of an organic polymer resin and provided on the upper electrode, and a lead wire electrically connected to the upper electrode through an aperture formed in the protective film, characterized in that, the area of the aperture is 2.5 mm² or less, and/or 10 % or less of the total area of the upper electrode.

According to claim 3 of the present invention, there is provided a capacitive humidity sensor comprising, a humidity sensitive film made of an organic polymer resin and provided on an electrically conductive substrate serving as a lower electrode, a moisture permeable upper electrode provided on the humidity sensitive film, and a lead wire electrically connected to the upper electrode, characterized in that, the lead wire is wholly or partially made of metal having a flat shape.

According to claim 4 of the present invention, there is provided a capacitive humidity sensor comprising, a humidity sensitive film made of an organic polymer resin and provided on an electrically conductive substrate serving as a lower electrode, a moisture permeable upper electrode provided on the humidity sensitive film, a protective film made of an organic polymer resin and provided on the upper electrode, and a lead wire electrically connected through an aperture formed in the protective film, characterized in that, the lead wire is wholly or partially made of metal having a flat shape.

According to claim 5 of the present invention, there is provided the capacitive humidity sensor as claimed in any one of claims 1 through 4, further characterized in that, the lead wire is connected to the upper electrode by using electrically conductive adhesive.

According to claim 6 of the present invention, there is provided the capacitive humidity sensor as claimed in any one of claims 1 through 5, further characterized in that, the lead wire is made of metal having corrosion resistance, or of metal to which a corrosion resistant plating has been applied.

According to claim 7 of the present invention, there is provided the capacitive humidity sensor as claimed in claim 3 or claim 4, further characterized in that, the width of an end of the lead wire connected to the upper electrode is narrower than another end of the lead wire.

According to claim 8 of the present invention, there is provided the capacitive humidity sensor as claimed in claim 1 or claim 2, further characterized in that, the lead wire is taken out of the electrode, by using gold wire, gold plated wire or gold alloy wire, by wire bonding.

According to claim 9 of the present invention, there is provided a method for manufacturing a capacitive humidity sensor comprising steps of, providing a humidity sensitive film made of an organic polymer resin on an electrically conductive substrate serving as a lower electrode, providing a moisture permeable upper electrode on the humidity sensitive film, and electrically connecting a lead wire to the upper electrode, further comprising a step of, providing a lead frame in which a plurality of jointed lead wires has been formed in a shape of comb-like teeth, and placing an arbitrary lead wire of the lead frame at a predetermined position, so that the lead wire is electrically connected to the upper electrode.

And according to claim 10 of the present invention, there is provided a method for manufacturing a capacitive humidity sensor comprising steps of, providing a humidity sensitive film made of an organic polymer resin on an electrically conductive substrate serving as a lower electrode, providing a moisture permeable upper electrode on the humidity sensitive film, providing a protective film made of an organic polymer resin on the upper electrode, and electrically connecting a lead wire to the upper electrode through an aperture formed in the protective film, further comprising steps of, providing a lead frame in which a plurality of jointed lead wires has been formed in a shape of comb-like teeth, and placing an arbitrary lead wire of the lead frame at a predetermined position, so that the lead wire is electrically connected to the upper electrode.

Accordingly, in the case of the capacitive humidity sensor as claimed in claim 1 of the present invention, the area for the junction of the upper electrode and the lead wire must be 2.5 mm² or less, and/or 10 % or less of the total area of the upper electrode. Thus, any factor inhibiting the permeation of moisture may be minimized. Consequently, it is possible to solve the problems of the conventional capacitive humidity sensor, i.e. the deterioration of humidity sensitivity or the increase of hysteresis, and it is also possible to solve the problem that, after being exposed in the atmosphere of high temperature and high humidity, when the environment is reset to the atmosphere of low humidity, the sensor cannot be reset to the initial state easily. Further, it is possible to prevent the occurrence of crack at the junction of the upper electrode and the lead wire.

Although the area for the junction of the upper electrode and the lead wire is 2.5 mm² or less, it is more preferable to provide the area as 1.0 mm² or less. Further, although the area for the junction is 10 % or less of the total area of the upper electrode, it is more preferable to provide the area as 3 % or less thereof.

However, as long as the degree of effect is not considered, the present invention is not limited to the above values.

In the case of the capacitive humidity sensor as claimed in claim 2 of the present invention the capacitive humidity sensor is provided with the protective film, and the area of the aperture formed in the protective film must be 2.5 mm² or less, and/or 10 % or less of the total area of the upper electrode. Consequently, it is possible to form the aperture, serving as an outlet of the lead wire, by patterning. Thus, the area for the junction of the upper electrode and the lead wire may be further unified. When the photosensitive polyimide resin is used as the organic polymer resin comprising the protective film, it is possible to form the aperture by photolithographic patterning, whereby the aperture having a small area may be formed easily. Further, when the upper electrode is connected to the lead wire by electrically conductive adhesive, for example, it is very difficult to uniformly reduce the contact area between them, by controlling the coating volume of the electrically conductive adhesive. However, according to the present invention, the small aperture may be formed uniformly in the protective film by the above method. Thus, when the electrically conductive adhesive is coated so that the aperture may be covered thereby, it is possible to obtain the uniform contact area constantly.

In the case of claim 2, the area for the junction of the upper electrode and the lead wire is 2.5 mm² or less, and it is also more preferable to provide the area as 1.0 mm² or less. Further, the area for the junction is 10 % or less of the total area of the upper electrode, and it is also more preferable to provide the area as 3 % or less thereof.

However, as long as the degree of effect is not considered, the present invention is not limited to the above values.

In the case of the capacitive humidity sensor as claimed in claim 3 of the present invention, the lead wire is wholly or partially made of metal having a flat shape. Thus, the morphological stability of the lead wire itself may improve, whereby the connecting work, such as the positioning for connecting thereof to the upper electrode, can be facilitated. Further, because the connecting work such as the positioning is facilitated, it is also possible to reduce the area for the junction of the upper electrode, whereby the humidity sensitive property may also improve.

The same applies to the case of the capacitive humidity sensor as claimed in claim 4 of the present invention. As the lead wire is also wholly or partially made of metal having a flat shape, the morphological stability of the lead wire itself may improve, whereby the connecting work, such as the positioning for connecting thereof to the upper electrode, can be facilitated. Further, because the connecting work such as the positioning is facilitated, it is also possible to reduce the area for the junction of the upper electrode, whereby the humidity sensitive property may also improve

When the lead wire is connected to the upper electrode, it is preferable that the lead wire may be connected to the upper electrode by using electrically conductive adhesive.

Preferably, the lead wire may be made of metal having corrosion resistance, or of metal to which the corrosion resistant plating has been applied.

In the case of the capacitive humidity sensor as claimed in claim 7 of the present invention, when the lead wire is wholly or partially made of metal having a flat shape, it is possible to form the shape of the lead wire, that the width of the end of the lead wire connected to the upper electrode is narrower than another end of the lead wire. Consequently, it is possible to further improve the morphological stability, and also to facilitate the connecting work such as the positioning. In addition, because the area for the junction may be further reduced, it is possible to further improve the humidity sensitive property.

Preferably, the lead wire may be taken out of the electrode, by using gold wire, gold plated wire or gold alloy wire, by wire bonding.

According to the method for manufacturing the capacitive humidity sensor of the present invention, first, the humidity sensitive film made of organic polymer resin is provided on the electrically conductive substrate serving as the lower electrode. Second, the moisture permeable upper electrode is provided on the humidity sensitive film. Third, the lead wire is electrically connected to the upper electrode. Further, the lead frame is provided, in which a plurality of jointed lead wires has been formed in a shape of comb-like teeth, and an arbitrary lead wire of the lead frame is placed at a predetermined position, so that the lead wire is electrically connected to the upper electrode. When this type of lead frame is used, the positioning and connecting work of the lead wire may be facilitated with much accuracy.

The same applies to the case of the capacitive humidity sensor having the protective film made of organic polymer resin.

The electrically conductive substrate according to the present invention may be made of any non-insulating material, such as metal, e.g. stainless steel, or semiconductor, e.g. silicon.

When any metal material is used as the electrically conductive substrate, it is not necessary to provide the lower electrode formed on the bottom surface of the electrically conductive substrate. Further, when a silicon single crystal substrate is used therefor, the lower electrode may be made of any material, as long as the Ohmic contact is formed together with the silicon single crystal.

The humidity sensitive film, made of organic polymer resin and formed on the upper surface of the electrically conductive substrate, may be formed by spin coat method, dipping method, LB method, vapor deposition polymerization method, etc., and after being formed, the humidity sensitive film is hardened by a predetermined heat processing. As for the organic polymer resin, it is possible to use, for example, polyimide resin, cellulose acetate butyrate, acrylic resin, phenol resin, or polyetherimide resin, etc.

The structure of the upper electrode formed on the humidity sensitive film is not limited, as long as the moisture is permeable easily inside the humidity sensitive film. For example, the upper electrode may be obtained by a method that, a metal layer, made of at least any one layer among gold, platinum, chromium, titanium, aluminum, etc., is formed by vacuum deposition or by sputtering method.

There is the case that the protective film, made of organic polymer resin, should be formed on the upper surface of the upper electrode, for the purpose of mechanically and chemically protecting the upper electrode. As for the organic polymer resin, it is possible to use, for example, polyimide resin, silicone resin, acetyl cellulose, cellulose acetate butyrate, or polyamide resin, etc. In particular, the photosensitive polyimide resin is very preferable, because of the good adherent property to the humidity sensitive film, and because it is possible to form the aperture by patterning easily, for taking the lead wire out of the upper electrode.

The structural elements as discussed above have been disclosed in detail, in Japanese Examined Publication No. Hei 6-105235, Japanese Patent No. 3078587, Japanese Patent No. 2925347 and Japanese Examined Publication No. Hei 8-23542, and it is possible to apply these elements to the present invention.

The lead wire connected to the upper electrode may be made of any material, as long as it is electrically conductive. However, if thick and hard material is used, although the positioning may be done easily, the humidity sensitive film formed under the junction may be damaged easily, which would cause the problem of poor yield. On the other hand, if thin and soft material is used, although the humidity sensitive film formed under the junction would not be damaged easily, it is difficult to maintain the shape of the lead wire during positioning, which would cause the problem of considerable poor workability. Thus, according to the present invention, by considering the above problems, there is provided the lead wire, wholly or partially made of metal having a flat shape. In particular, when the lead wire is wholly in a shape of foil, it has the good positioning workability and morphological stability, and the production cost is low, and the mechanical stress against the junction may be reduced, whereby the problem of poor yield may be avoided. As for the typical material of the lead wire, it is possible to use any material commonly used for lead frames, typically copper alloy such as copper, brass, white metal, phosphor bronze or beryllium copper. It is also possible to use any metal having corrosion resistance, such as gold, platinum, titanium, nickel, stainless steel, copper alloy, aluminum alloy, or nickel alloy, by considering the corrosion resistance. The corrosion resistance of the lead wire is very important, particularly in the sense of reliability of the sensor in an atmosphere of high temperature and high humidity. Among others, under operation condition containing the direct electric current, the corrosion may occur at the junction of the lead wire and the upper electrode. Therefore, the lead wire may be preferably made of any metal having corrosion resistance, or of any metal to which corrosion resistant plating has been applied. For example, when copper alloy such as phosphor bronze is used for the lead wire, it is preferable to apply one or more layer of corrosion resistant plating to the surface of the lead wire, such as the plating by nickel, chrome, silver, gold or platinum, whereby the life of sensor may be considerably extended, even under the atmosphere of high temperature and high humidity.

As for the electrically conductive adhesive used for connecting the upper electrode to the lead wire, for example, it is possible to use the material, in which silver or carbon serving as a filler is contained in epoxy resin or silicone resin.

There is another method for connecting the upper electrode to the lead wire. According to this method, there is a pad, serving as an adhesive layer, formed at a part of the upper electrode on the humidity sensitive film, to which the wire bonding is applied, by using gold wire, gold plated wire or gold alloy wire. The wire bonding is commonly used in the field of semiconductors, and is an excellent method for mass production. However, the shape of the upper electrode of the capacitive humidity sensor has been formed to be very thin, because the permeation of moisture is indispensable, and if the ordinary upper electrode is used, it is impossible to apply the wire bonding thereto. Thus, according to the present invention, the pad is formed at any part of the upper electrode, and the bonding is done by means of the pad. The structure of the pad is not limited, as long as the bonding of gold wire, gold plated wire or gold alloy wire can be done. The wire bonding has a reliable reputation in the field of semiconductors, and it is possible to be applied to mass production, whereby the production cost may be reduced.

### BRIEF DESCRIPTION OF DRAWINGS

Figure 1 is a plan view showing a structure of a capacitive humidity sensor according to a first embodiment of the present invention;
Figure 2 is a sectional view as seen by the line II - II of Fig. 1, according to the first embodiment of the present invention;
Figure 3 is a plan view showing a structure of a capacitive humidity sensor according to a second embodiment of the present invention;
Figure 4 is a sectional view as seen by the line IV - IV of Fig. 3, according to the second embodiment of the present invention;
Figure 5 is an expanded sectional view of part V of Fig. 4, according to the second embodiment of the present invention;
Figure 6 is a partial plan view of a lead frame provided with lead wires in a shape of comb-like teeth, according to the second embodiment of the present invention;
Figure 7 is an expanded view of part VII of Fig. 6, according to the second embodiment of the present invention;
Figure 8 is a plan view showing a structure of a capacitive humidity sensor according to a third embodiment of the present invention;
Figure 9 is a sectional view as seen by the line IX - IX of Fig. 8, according to the third embodiment of the present invention;
Figure 10 is an expanded sectional view of part X of Fig. 9, according to the third embodiment of the present invention;
Figure 11 is a plan view showing a structure of a capacitive humidity sensor according to a prior art;
Figure 12 is a sectional view as seen by the line XII - XII of Fig. 11, according to the prior art; and
Fig. 13 is a comparative table explaining the difference of effects between the present invention and the prior art.

### BEST MODE FOR CARRYING OUT THE INVENTION

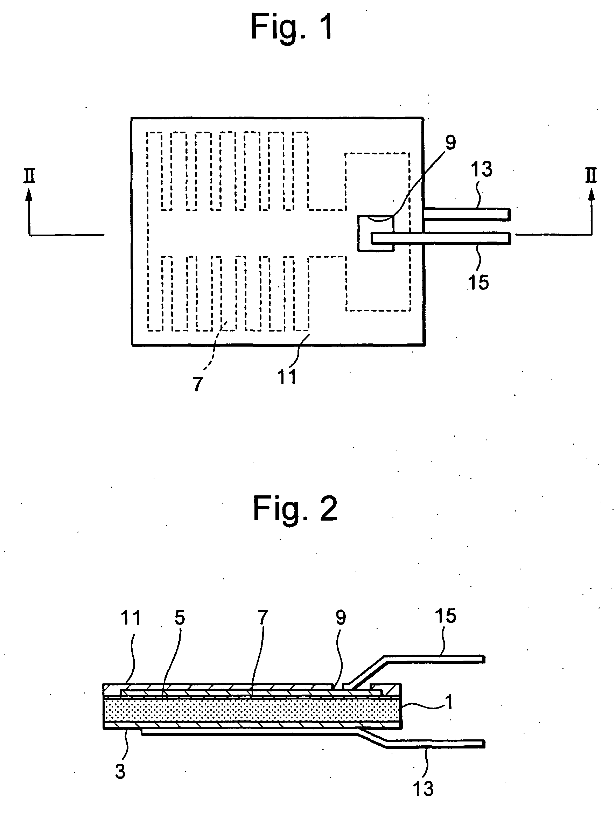

A first embodiment of the present invention will be explained with reference to Figs. 1 and 2. Fig. 1 is a plan view showing a structure of a capacitive humidity sensor according to the first embodiment of the present invention, and Fig. 2 is a sectional view as seen by the line II - II of Fig. 1.

For reference, the structure will be explained together with the explanation of manufacturing process thereof.

There is an N-type silicon single crystal substrate 1, of which upper surface has been mirror-finished, and of which resistivity is not more than 0.015 Ω. There is a lower electrode 3, which has been formed by vacuum deposition on the whole bottom surface of the silicon single crystal substrate 1. Then the etching by hydrofluoric acid is applied to the natural oxidation film on the upper surface of the silicon single crystal substrate 1, whereby a polyimide humidity sensitive film 5, of which thickness is about 1.0 µ m, is formed on the whole upper surface of the silicon single crystal substrate 1. The polyimide humidity sensitive film 5 is cured by oven or hot plate, at a temperature about 300 - 400 °C. Thereafter, a metal cover is placed on the polyimide humidity sensitive film 5, whereby a gold upper electrode 7, of which thickness is about 200 A (Angstrom), and of which area is 13.35 mm², is formed by vacuum deposition.

Then, a photosensitive polyimide resin is coated on the upper electrode 7, and pre-baking, exposure, development and post-baking have been applied to the upper electrode 7. Consequently, a protective film 11 is formed, having an aperture 9, of which area is 0.49 mm² (corresponding to 3.7 % of the total area of the upper electrode 7), serving as an outlet for taking a lead wire out of the upper electrode 7. The thickness of this protective film 11 is about 0.3 µm. Finally, a lead wire 13 made of stainless steel plate is adhered, by electrically conductive adhesive, to the lower electrode 3 formed on the bottom surface of the silicon single crystal substrate 1. Further, a lead wire 15, of which diameter is 0.08 mm and made of silver plated soft copper wire, is connected to the upper electrode 7, by electrically conductive adhesive, through the aperture 9 provided in the protective film 11. Thus, a capacitive humidity sensor is obtained.

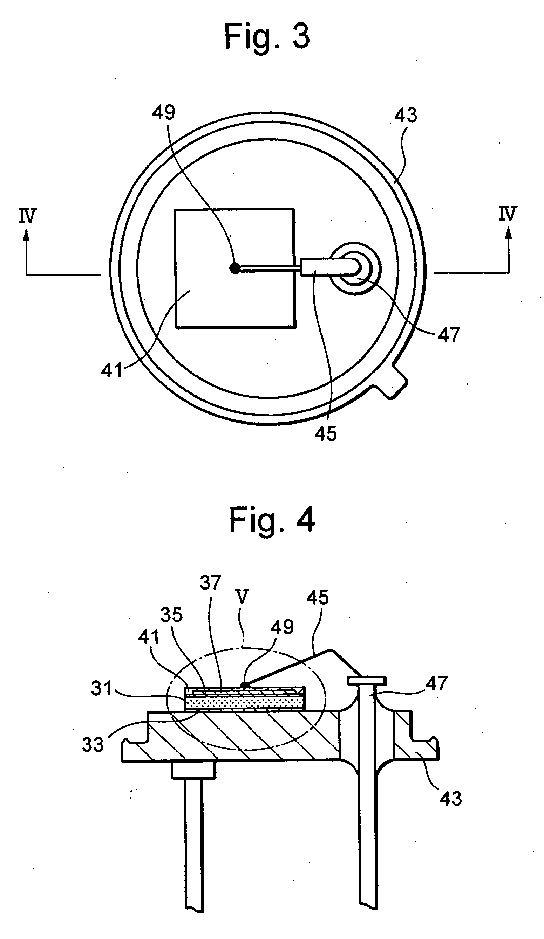

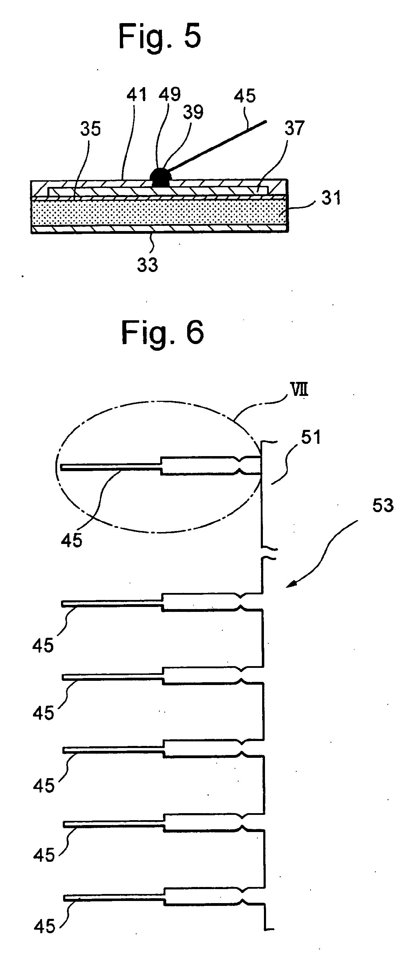

Now a second embodiment of the present invention will be explained with reference to Figs. 3 through 7. Fig. 3 is a plan view showing a structure of a capacitive humidity sensor according to this embodiment of the present invention, Fig. 4 is a sectional view as seen by the line IV - IV of Fig. 3, and Fig. 5 is an expanded sectional view of the part V of Fig. 4.

In the present embodiment, the structure will also be explained together with the explanation of manufacturing process thereof.

As illustrated in Fig. 5, there is an N-type silicon single crystal substrate 31, of which upper surface has been mirror-finished, and of which resistivity is not more than 0.015 Ω. There is a lower electrode 33, which has been formed by vacuum deposition on the whole bottom surface of the silicon single crystal substrate 31. Then the etching by hydrofluoric acid is applied to the natural oxidation film on the upper surface of the silicon single crystal substrate 31, whereby a polyimide humidity sensitive film 35, of which thickness is about 1.0 µ m, is formed on the whole upper surface of the silicon single crystal substrate 31. The polyimide humidity sensitive film 35 is cured by oven or hot plate, at a temperature about 300 - 400 °C. Thereafter, a metal cover is placed on the polyimide humidity sensitive film 35, whereby a gold upper electrode 37, of which thickness is about 200 A (Angstrom), and of which area is 8.41 mm², is formed by vacuum deposition. Then, a photosensitive polyimide resin is coated on the upper electrode 37, and pre-baking, exposure, development and post-baking have been applied to the upper electrode 37. Consequently, a protective film 41 is formed, having an aperture 39, of which area is 0.126 mm² (corresponding to 1.5 % of the total area of the upper electrode 37), serving as an outlet for taking a lead wire out of the upper electrode 37. The thickness of this protective film 41 is about 0.3 µ m.

Thereafter, as illustrated in Figs. 3 and 4, a can-type package 43 is used, such as TO-5 or TO-39 commonly used for semiconductor package, for the purpose of welding a lead wire 45, of which thickness is 0.03 mm and made of phosphor bronze foil, to an inner lead 47 insulated from a base.

It is clear that the available package is not limited to the above example, and it is possible to use, for example a quartz crystal package or other original package.

Then a sensor chip, which has been divided by scriber, etc., is fixed on the base of package 43 by die bonding. Thereafter, the positioning of the nickel plated lead wire 45, each of which being jointed in a shape of comb-like teeth and made of phosphor bronze foil, is done, so that the top of the lead wire 45 may be positioned above the aperture 39 of the upper electrode 37. Then the other end of the lead wire 45 is connected to the inner lead 47 of the package. The connection between the lead wire 45 and the inner lead 47 may be done by any method, as long as they are electrically connected to each other, but it is preferable to use spot welding for the purpose of good workability. After the lead wire 45 is connected and fixed to the inner lead 47, the lead wire 45 is cut and separated from the joint part. Finally, an electrically conductive adhesive 49 is coated, through the aperture 39, at the contact point between the lead wire 45 made of phosphor bronze foil and the upper electrode 37. Then the electrically conductive adhesive 49 is hardened, whereby the sensor is completed.

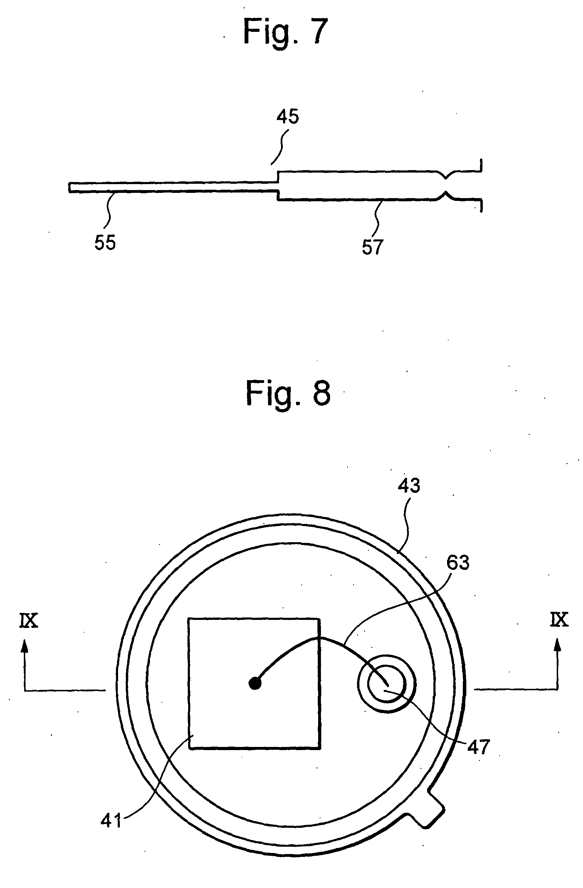

Now the lead wire 45 made of phosphor bronze foil will be explained in detail. As illustrated in Fig. 6, the lead wires 45 have been jointed in a shape of comb-like teeth in advance. In other words, a plurality of lead wires 45 has been jointed at a predetermined pitch by means of a joint part 51, and is forming a lead frame 53. As illustrated in Fig. 7, each lead wire 45 has the shape that a top part 55 is narrower than a base part 57.

The technical background will now be explained, why this lead wire 45 is used. For example, in the first embodiment as discussed before, the silver plated soft copper wire is used as the lead wire 15. This type of silver plated soft copper wire is a flexible material, thus there is a low risk of causing damage to the humidity sensitive film during connecting work, and this material has a merit of inhibiting the occurrence of defective due to pin hole. On the other hand, because the shape of the sectional surface of this material is round and thin, the material has a weak point of poor morphological stability. The poor morphological stability would cause the difficulty in positioning during connecting, which would result in laborious connecting work. Further, the area for the junction of the upper electrode must be enlarged, which would deteriorate the humidity sensitive property, and also increase the production cost.

The second embodiment is based on the technical background as discussed above, and the morphological stability may be improved by using the lead wire 45 made of phosphor bronze and in the shape of foil, whereby the connecting work such as the positioning may be facilitated. Further, because of using the lead frame 53, in which a plurality of lead wire 45 has been jointed in a shape of comb-like teeth at a predetermined pitch by means of the joint part 51, it is also possible to facilitate the connecting work such as the positioning. When this type of the shape of the lead frame is used, for example, by applying press working or etching to a metal foil, it is possible to manufacture a lead frame easily, having jointed lead wires in an arbitrary shape, thus the production cost may be reduced.

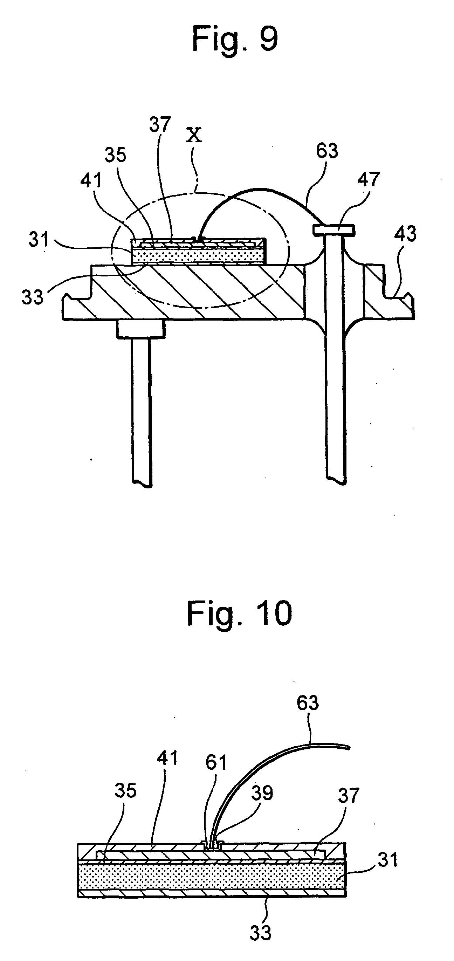

Now a third embodiment of the present invention will be explained with reference to Figs. 8 through 10. Fig. 8 is a plan view showing a structure of a capacitive humidity sensor according to this embodiment of the present invention, Fig. 9 is a sectional view as seen by the line IX - IX of Fig. 8, and Fig. 10 is an expanded sectional view of the part X of Fig. 9.

For reference, the process to form the protective film 41 is substantially the same as that of the second embodiment as discussed above. Thus, the identical numerals and letters will be given to the identical parts, and the explanation thereof will not be made.

The characteristic structure of the third embodiment is highlighted after the protective film 41 has been formed. As illustrated in Fig. 10 in the expanded view, after the protective film 41 has been formed, a metal mask is placed on the protective film 41, whereby a pad 61 is formed by vacuum deposition, so that the pad 61 may cover the aperture 39 of the protective film 41. Thereafter, as illustrated in Figs. 8 and 9, a sensor chip, which has been divided by scriber, etc., is fixed on the base of package 43 by die bonding. Eventually, a gold wire 63 having the thickness of 0.025 mm is placed between the bad 61 and the inner lead 47, and the gold wire 63 is connected by ultrasonic bonder.

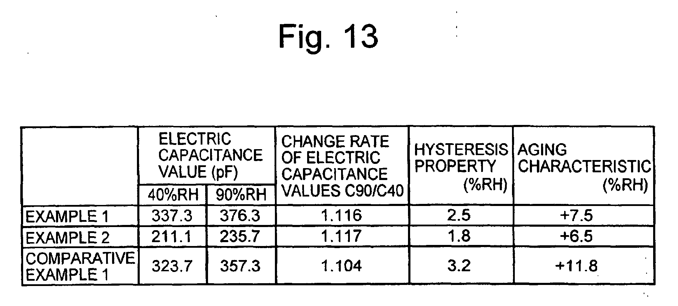

Now, the humidity sensitive properties of capacitive humidity sensors according to "Example 1" and "Example 2", respectively being the reductions of the capacitive humidity sensors according to the first and the second embodiments of the present invention, will be assessed by comparing with the "Comparative Example 1". Accordingly, the experimental test was done respectively, as for the electric capacitance values, change rate of electric capacitance values, hysteresis properties, and aging characteristics when being exposed in an atmosphere of 40 °C, 90 % RH for 1,000 hours. There were 10 samples respectively prepared for each of the Examples or Comparative Example, and the assessment value was obtained by calculating the average of the measured value of each sample. The details of the test is as follows, and the result is as per shown in the table of Fig. 13.

For reference, the Comparative Example 1 in the present case means the capacitive humidity sensor as explained in the prior art of the present invention, i.e. the capacitive humidity sensor as illustrated in Figs. 11 and 12.

Electric Capacitance Values and Change Rate of Electric Capacitance Values:

The electric capacitance values were measured by LCR meter, at the temperature of 25 °C, and at the relative humidities of 40 % RH and 90 % RH, under the conditions of measured voltage at 1 V, measured frequency at 20 KHz. Then the change rate of electric capacitance values were obtained based on these measured values.

### Hysteresis Properties:

The properties during humidification and the properties during dehumidification, at 25 °C and in the range between 0 and 90 % RH, were continuously measured by LCR meter, and the difference between the electric capacitance values during humidification and the electric capacitance values during dehumidification at 60 % RH were obtained by relative humidity conversion.

### Aging Characteristics:

The electric capacitance values of sensors, in the atmosphere at 25 °C, 60 % RH, were measured by LCR meter. Thereafter, the sensors were exposed in the atmosphere at 40 °C, 90 % RH for 1,000 hours, and the changing values were obtained by relative humidity conversion.

As illustrated in Fig. 13, the Comparative Example 1 indicated a practically sufficient humidity sensitive property. However, when the Comparative Example 1 is compared with the Example 1 and Example 2, in spite of the same humidity sensitive element used for each sample, the Comparative Example 1 had the smaller change rate of electric capacitance value, and also had the larger hysteresis property and the aging characteristics when being exposed in the atmosphere at 40 °C, 90 % RH. On the other hand, according to the Examples 1 and 2, the change rate of electric capacitance values were large, and the hysteresis properties and the aging characteristics, when being exposed in the atmosphere at 40 °C, 90 % RH, were small and stable. In particular, according to the second embodiment in which the area of the aperture provided in the protective film is not more than 3 % (i.e. 1.5 %) of the total area of the upper electrode, more excellent humidity sensitive property was obtained.

As discussed above, according to the present invention, when the area for the junction of the upper electrode and the lead wire is 2.5 mm² or less, and/or 10 % or less of the total area of the upper electrode, or in the case that the protective film is provided, when the area of the aperture is 2.5 mm² or less, and/or 10 % or less of the total area of the upper electrode, it is possible to provide the capacitive humidity sensor, which can stably maintain the excellent humidity sensitive property for a long period of time.

When the lead wire is wholly or partially made of metal having a flat shape, the morphological stability of the lead wire itself may improve, whereby the connecting work, such as the positioning for connecting thereof to the upper electrode, can be facilitated. Further, because the connecting work such as the positioning is facilitated, it is also possible to reduce the area for the junction of the upper electrode, whereby the humidity sensitive property may also improve.

Further, when the lead wire is wholly or partially made of metal having a flat shape, it is possible to form the shape of the lead wire, that the width of the end of the lead wire connected to the upper electrode is narrower than another end of the lead wire, whereby it is possible to further improve the morphological stability, and also to facilitate the connecting work such as the positioning. In addition, because the area for the junction may be further reduced, it is possible to further improve the humidity sensitive property.

It is possible that the lead wire is taken out of the electrode, by using gold wire, gold plated wire or gold alloy wire, by wire bonding. In this case, it is possible to improve the yield without spoiling the workability, whereby the production cost may be reduced considerably.

Further, according to the method for manufacturing the capacitive humidity sensor of the present invention, it is possible to manufacture a desired structure of capacitive humidity sensor easily.

### INDUSTRIAL APPLICABILITY

As above discussed, the present invention relates to the capacitive humidity sensor which detects the relative humidity in the atmosphere according to the change of electric capacitance value of the organic polymer film. In particular, according to the present invention, it is possible to provide the capacitive humidity sensor which can stably maintain the excellent humidity sensitive property for a long period of time, and which has the improved structure of junction of the electrode and the leading wire, whereby the production cost may be reduced.

## Claims

1. A capacitive humidity sensor comprising, a humidity sensitive film made of an organic polymer resin and provided on an electrically conductive substrate serving as a lower electrode, a moisture permeable upper electrode provided on said humidity sensitive film, and a lead wire electrically connected to said upper electrode, **characterized in that**,
the area for a junction of said upper electrode and said lead wire is 2.5 mm² or less, and/or 10 % or less of the total area of said upper electrode.

2. A capacitive humidity sensor comprising, a humidity sensitive film made of an organic polymer resin and provided on an electrically conductive substrate serving as a lower electrode, a moisture permeable upper electrode provided on said humidity sensitive film, a protective film made of an organic polymer resin and provided on said upper electrode, and a lead wire electrically connected to said upper electrode through an aperture formed in said protective film, **characterized in that**,
the area of said aperture is 2.5 mm² or less, and/or 10 % or less of the total area of said upper electrode.

3. A capacitive humidity sensor comprising, a humidity sensitive film made of an organic polymer resin and provided on an electrically conductive substrate serving as a lower electrode, a moisture permeable upper electrode provided on said humidity sensitive film, and a lead wire electrically connected to said upper electrode, **characterized in that**,
said lead wire is wholly or partially made of metal having a flat shape.

4. A capacitive humidity sensor comprising, a humidity sensitive film made of an organic polymer resin and provided on an electrically conductive substrate serving as a lower electrode, a moisture permeable upper electrode provided on said humidity sensitive film, a protective film made of an organic polymer resin and provided on said upper electrode, and a lead wire electrically connected through an aperture formed in said protective film, **characterized in that**,
said lead wire is wholly or partially made of metal having a flat shape.

5. The capacitive humidity sensor as claimed in any one of claims 1 through 4, further **characterized in that**,
said lead wire is connected to said upper electrode by using electrically conductive adhesive.

6. The capacitive humidity sensor as claimed in any one of claims 1 through 5, further **characterized in that**,
said lead wire is made of metal having corrosion resistance, or of metal to which a corrosion resistant plating has been applied.

7. The capacitive humidity sensor as claimed in claim 3 or claim 4, further **characterized in that**,
the width of an end of said lead wire connected to said upper electrode is narrower than another end of said lead wire.

8. The capacitive humidity sensor as claimed in claim 1 or claim 2, further **characterized in that**,
said lead wire is taken out of said electrode, by using gold wire, gold plated wire or gold alloy wire, by wire bonding.

9. A method for manufacturing a capacitive humidity sensor comprising steps of, providing a humidity sensitive film made of an organic polymer resin on an electrically conductive substrate serving as a lower electrode, providing a moisture permeable upper electrode on said humidity sensitive film, and electrically connecting a lead wire to said upper electrode, further comprising a step of,
providing a lead frame in which a plurality of jointed lead wires has been formed in a shape of comb-like teeth, and placing an arbitrary lead wire of said lead frame at a predetermined position, so that said lead wire is electrically connected to said upper electrode.

10. A method for manufacturing a capacitive humidity sensor comprising steps of, providing a humidity sensitive film made of an organic polymer resin on an electrically conductive substrate serving as a lower electrode, providing a moisture permeable upper electrode on said humidity sensitive film, providing a protective film made of an organic polymer resin on said upper electrode, and electrically connecting a lead wire to said upper electrode through an aperture formed in said protective film, further comprising steps of,
providing a lead frame in which a plurality of jointed lead wires has been formed in a shape of comb-like teeth, and placing an arbitrary lead wire of said lead frame at a predetermined position, so that said lead wire is electrically connected to said upper electrode.
